# EUROPÄISCHE PATENTSCHRIFT

(11) **EP 3 199 314 B1**
(45) Veröffentlichungstag und Bekanntmachung des Hinweises auf die Patenterteilung: **31.07.2019**
(21) Anmeldenummer: 16152944.1
(22) Anmeldetag: 27.01.2016
(51) Int. Cl.: B29B 9/06, B29C 48/30, B29C 48/345, B29C 48/86, B01J 2/20, B29C 48/04, B29C 48/05

(54) **STRANGERZEUGUNGSVORRICHTUNG UND DARAUF BEZOGENE GRANULIERVORRICHTUNG**
STRAND GENERATING DEVICE, AND RELATED GRANULATOR DEVICE
DISPOSITIF DE PRODUCTION DE TIGES, ET DISPOSITIF DE GRANULATION ASSOCIÉ

(43) Veröffentlichungstag der Anmeldung: 02.08.2017
(73) Patentinhaber: Coperion GmbH, 70469 Stuttgart (DE)
(72) Erfinder: Jessing, Hannes Paul, 70191 Stuttgart (DE)
(74) Vertreter: Rau, Schneck & Hübner Patentanwälte Rechtsanwälte PartGmbB

(56) Entgegenhaltungen:
- EP-A1- 1 607 200
- EP-A2- 2 399 716
- WO-A1-2008/102874
- WO-A1-2010/090046
- DE-A1-102008 004 858
- DE-A1-102013 200 661
- JP-A- 2009 292 015
- US-A- 4 421 470
- US-A- 4 621 996
- US-A1- 2014 328 961

## Beschreibung

Die Erfindung betrifft eine Strangerzeugungsvorrichtung zum Erzeugen granulierbarer Materialstränge gemäß dem Oberbegriff des Anspruchs 1. Ferner betrifft die Erfindung eine Granuliervorrichtung für eine Schneckenmaschine mit einer derartigen Strangerzeugungsvorrichtung.

Aus der DE 103 22 610 A1 ist eine Granuliervorrichtung für eine Schneckenmaschine bekannt. Das zu granulierende Material wird in der Schneckenmaschine aufbereitet und anschließend durch eine Lochplatte gefördert, sodass granulierbare Materialstränge erzeugt werden. Die Materialstränge werden mittels rotierender Schneidmesser granuliert.

Um ein Verfestigen des Materials in den Durchtrittslöchern der Lochplatte zu vermeiden, wird die Lochplatte beheizt. Aus der DD 113 322 B1 ist eine beheizbare Lochplatte bekannt, bei der elektrische Heizpatronen in Bohrungen der Lochplatte eingesetzt sind. Die Heizpatronen können achsparallel oder radial in der Lochplatte angeordnet sein.

Aus den Druckschriften DE 10 2013 200 661 A1 und EP 2 399 716 A2 ist ein Granulierkopf eines Unterwassergranulators bekannt. Die Kunststoffschmelze wird zunächst auf der Eintrittsseite des Granulierkopfes mittels eines Kegels in mehrere Teilströme aufgeteilt. Durch Kanäle, die in einem Basisbauteil ausgebildet sind, gelangen die Schmelzeströme zu Durchgangsöffnungen einer Lochplatte. Das Basisbauteil wird mittels Heizpatronen beheizt, sodass die Kunststoffschmelze in den Kanälen nicht erstarrt.

Aus der DE 10 2008 004 858 A1 ist ein Unterwassergranulator bekannt. Der Unterwassergranulator weist eine Düsenplatte auf, die an einer Rückwand mit Schmelzekanälen befestigt ist. Die Düsenplatte wird mittels eine Temperierfluids temperiert. Das Temperierfluid ist in einer Kavität aufgenommen und wird mittels Heizpatronen beheizt.

Aus der US 2014/0328961 A1 ist ein Unterwassergranulator mit einem Einlaufgehäuse und darin ausgebildeten Durchgangsöffnungen sowie mit einer an dem Einlaufgehäuse befestigten Lochplatte bekannt. In der Lochplatte sind radial elektrische Heizelemente angeordnet.

Aus der US 4 421 470 A ist eine Granuliervorrichtung bekannt. Die Granuliervorrichtung weist eine Düsenplatte auf, die an einem Extrudergehäuse befestigt ist. In der Düsenplatte sind radial verlaufende Ausnehmungen ausgebildet, in denen Heizelemente angeordnet sind.

Aus der US 4 621 996 A ist eine Granuliervorrichtung bekannt. Die Granuliervorrichtung weist ein Einlaufgehäuse auf, das die Kunststoffschmelze in mehrere Teilströme aufteilt und zu einer Lochplatte führt. In der Lochplatte sind radial verlaufende Ausnehmungen ausgebildet, die zur Aufnahme von elektrischen Heizelementen dienen.

Der Erfindung liegt die Aufgabe zugrunde, eine Strangerzeugungsvorrichtung zum Erzeugen granulierbarer Materialstränge zu schaffen, die in einfacher Weise eine gleichmäßige Beheizung einer Lochplatte und einen geringen Druckverlust des durch die Lochplatte strömenden Materials ermöglicht.

Diese Aufgabe wird durch eine Strangerzeugungsvorrichtung mit den Merkmalen des Anspruchs 1 gelöst. Die mindestens eine Lochplatte weist in der Strömungsrichtung des die Materialstränge erzeugenden Materials eine geringe Dicke auf, sodass die mindestens eine Lochplatte einen vergleichsweise geringen Druckverlust des Materials erzeugt. Durch den Verstärkungsträger hat die mindestens eine Lochplatte dennoch eine ausreichende mechanische Festigkeit. Der Verstärkungsträger weist gegenüber der mindestens einen Lochplatte in der Strömungsrichtung eine größere Dicke auf, sodass der Verstärkungsträger die mindestens eine elektrische Heizpatrone aufnehmen kann. Hierzu ist in dem Verstärkungsträger mindestens ein Aufnahmeraum ausgebildet, in dem die mindestens eine Heizpatrone angeordnet ist. Die Heizpatrone ist insbesondere in thermischem Kontakt mit dem Verstärkungsträger und liegt beispielsweise eng gegen den Verstärkungsträger an. Der Verstärkungsträger ist insbesondere aus einem Material mit einer hohen thermischen Leitfähigkeit, sodass die von der mindestens einen Heizpatrone erzeugte Wärme über den Verstärkungsträger in einfacher Weise auf die mindestens eine Lochplatte übertragen und verteilt wird. Die mindestens eine Lochplatte und der Verstärkungsträger sind beispielsweise separat voneinander ausgebildet, also als separate Bauteile, so dass die mindestens eine Lochplatte an dem Verstärkungsträger angeordnet und abgestützt ist. Alternativ ist die mindestens eine Lochplatte und der Verstärkungsträger beispielsweise als einteiliges Bauteil ausgebildet. Durch die einteilige Ausbildung wird eine hohe Steifigkeit und Festigkeit sowie eine hohe Wärmeleitfähigkeit erzielt.

Die Strangerzeugungsvorrichtung gewährleistet in einfacher Weise eine gleichmäßige Beheizung in Verbindung mit einem geringen Druckverlust. Durch die Verstärkungsstreben weist der Verstärkungsträger einerseits große freie Durchtrittsbereiche auf, die zur Anordnung der mindestens einen Lochplatte bereitstehen. Andererseits ermöglichen die Verstärkungsstreben in einfacher Weise eine Abstützung der mindestens einen Lochplatte in Verbindung mit einer großflächigen Verteilung und Übertragung der von der mindestens einen Heizpatrone erzeugten Wärme auf die mindestens eine Lochplatte.

Die Strangerzeugungsvorrichtung gewährleistet in einfacher Weise eine gleichmäßige Beheizung der mindestens einen Lochplatte. Dadurch, dass der mindestens eine Aufnahmeraum in einer zugehörigen Verstärkungsstrebe ausgebildet ist, wird die von der mindestens einen Heizpatrone erzeugte Wärme über die Verstärkungsstrebe verteilt auf die mindestens eine Lochplatte übertragen. Dadurch, dass der mindestens eine Aufnahmeraum in der Längserstreckungsrichtung der Verstärkungsstrebe ausgebildet ist, ist eine Heizpatrone mit einer hohen Heizleistung aufnehmbar und die erzeugte Wärme über die zugehörige Verstärkungsstrebe einfach verteil- und übertragbar.

Eine Strangerzeugungsvorrichtung nach Anspruch 2 gewährleistet in einfacher Weise eine gleichmäßige Beheizung in Verbindung mit einem geringen Druckverlust. Die Verstärkungsstreben sind radial zu der Mittellängsachse der Strangerzeugungsvorrichtung angeordnet. Insbesondere sind die Verstärkungsstreben mit einem jeweiligen der Mittellängsachse zugewandten inneren Ende miteinander verbunden. Die Verstärkungsstreben sind somit sternartig angeordnet und weisen insbesondere gleiche Winkelabstände voneinander auf. Vorzugsweise sind die Verstärkungsstreben einteilig miteinander ausgebildet.

Eine Strangerzeugungsvorrichtung nach Anspruch 3 gewährleistet in einfacher Weise eine gleichmäßige Beheizung in Verbindung mit einem geringen Druckverlust. Dadurch, dass die Verstärkungsstreben endseitig miteinander verbunden sind, weist der Verstärkungsträger eine hohe mechanische Festigkeit bzw. Steifigkeit auf und ermöglicht somit die Bereitstellung von großen freien Durchtrittsbereichen zur Strangerzeugung mittels der mindestens einen Lochplatte. Vorzugsweise sind die Verstärkungsstreben einteilig miteinander verbunden. Die Verstärkungsstreben sind vorzugsweise radial angeordnet und an einem jeweiligen der Mittellängsachse zugewandten inneren Ende miteinander verbunden und/oder an einem jeweiligen der Mittellängsachse abgewandten äußeren Ende mittels Verbindungsstreben miteinander verbunden. Hierzu sind die Verbindungsstreben beispielsweise in Form eines Kreisbogens ausgebildet. Zwischen zwei benachbarten Versteifungsstreben ist ein freier Durchtrittsbereich des Verstärkungsträgers ausgebildet. Der Durchtrittsbereich ist insbesondere kreissektorförmig oder dreieckförmig ausgebildet.

Eine Strangerzeugungsvorrichtung nach Anspruch 4 gewährleistet in einfacher Weise eine gleichmäßige Beheizung in Verbindung mit einem geringen Druckverlust. Durch die Anzahl der Verstärkungsstreben sind die mechanische Festigkeit, die freien Durchtrittsbereiche und die Wärmeverteilung bzw. die Wärmeübertragung auf die mindestens eine Lochplatte einstellbar.

Eine Strangerzeugungsvorrichtung nach Anspruch 5 gewährleistet in einfacher Weise eine gleichmäßige Beheizung. Die mindestens eine Lochplatte ist, insbesondere von der stromabwärtigen Seite, in den Verstärkungsträger eingesetzt und liegt gegen einen zugehörigen Verstärkungsträgeranschlag an. Die mindestens eine Lochplatte ist an dem Verstärkungsträger auswechselbar befestigt. Die mindestens eine Lochplatte bildet, insbesondere zusammen mit dem Verstärkungsträger, an der stromabwärtigen Seite eine ebene Fläche für mindestens ein Schneidmesser einer Granuliervorrichtung aus.

Eine Strangerzeugungsvorrichtung nach Anspruch 6 gewährleistet einen geringen Druckverlust. Dadurch, dass der Verstärkungsträger, insbesondere die Verstärkungsstreben, zumindest abschnittsweise einen sich in Richtung der stromaufwärtigen Seite verjüngenden Querschnitt haben, weist der Verstärkungsträger für das strömende Material einen geringen Strömungswiderstand auf.

Eine Strangerzeugungsvorrichtung nach Anspruch 7 gewährleistet in einfacher Weise einen geringen Druckverlust. Dadurch, dass die mindestens eine Lochplatte in der Strömungsrichtung eine geringe Dicke D₁ im Vergleich zu der Dicke D₂ der Verstärkungsstreben hat, verursacht die mindestens eine Lochplatte einen geringen Druckverlust. Die mechanische Festigkeit der mindestens einen Lochplatte ist dennoch durch die Verstärkungsstreben gewährleistet.

Eine Strangerzeugungsvorrichtung nach Anspruch 8 gewährleistet eine gleichmäßige Beheizung der mindestens einen Lochplatte. Durch die Erstreckung der mindestens einen Heizpatrone ist die erzeugte Wärme in einfacher Weise in radialer Richtung über den Verstärkungsträger auf die mindestens eine Lochplatte verteil- und übertragbar.

Eine Strangerzeugungsvorrichtung nach Anspruch 9 gewährleistet in einfacher Weise eine äußerst gleichmäßige Beheizung der mindestens einen Lochplatte. Die Heizleistung der mindestens einen Heizpatrone variiert entlang ihrer Längserstreckungsrichtung und nimmt insbesondere entlang ihrer Längserstreckungsrichtung zum freien Ende hin ab. Vorzugsweise ist die Heizleistung der mindestens einen Heizpatrone entlang ihrer Längserstreckungsrichtung einstellbar. Die zu beheizende Masse der mindestens einen Lochplatte nimmt in Richtung der Mittellängsachse ab. Dadurch, dass die mindestens eine Heizpatrone in Richtung der Mittellängsachse insbesondere eine abnehmende Heizleistung aufweist, ist die Heizleistung in einfacher Weise an die zu beheizende Masse angepasst. Die mindestens eine Heizpatrone ist beispielsweise derart ausgeführt, dass diese in ihrer Längserstreckungsrichtung mehrere Heizbereiche mit unterschiedlicher Heizleistung hat. Vorzugsweise ist die Heizleistung in jedem der Heizbereiche einstellbar.

Eine Strangerzeugungsvorrichtung nach Anspruch 10 gewährleistet in einfacher Weise eine gleichmäßige Beheizung der Lochplatten. Dadurch, dass mehrere Lochplatten an dem Verstärkungsträger angeordnet sind, ist die jeweilige Lochplatte einfacher und schneller beheizbar. Darüber hinaus ist die jeweilige Lochplatte einfacher herstellbar. Vorzugsweise ist die Anzahl M der Lochplatten gleich der Anzahl N der Verstärkungsstreben, so-dass eine Lochplatte jeweils in dem freien Durchtrittsbereich zwischen zwei benachbarten Verstärkungsstreben angeordnet ist.

Eine Strangerzeugungsvorrichtung nach Anspruch 11 gewährleistet in einfacher Weise eine schnelle und gleichmäßige Beheizung der Lochplatte.

Der Erfindung liegt ferner die Aufgabe zugrunde, eine Granuliervorrichtung für eine Schneckenmaschine zu schaffen, die in einfacher Weise eine gleichmäßige Beheizung einer Lochplatte und einen geringen Druckverlust des durch die Lochplatte strömenden Materials ermöglicht.

Diese Aufgabe wird durch eine Granuliervorrichtung mit den Merkmalen des Anspruchs 12 gelöst. Die Vorteile der erfindungsgemäßen Granuliervorrichtung entsprechen den bereits beschriebenen Vorteilen der erfindungsgemäßen Strangerzeugungsvorrichtung. Das mindestens eine Schneidmesser liegt insbesondere gegen die mindestens eine Lochplatte an, sodass die aus den Durchtrittslöchern austretenden Materialstränge unmittelbar durch das mindestens eine drehangetriebene Schneidmesser zu Granulat geschnitten werden.

Weitere Vorteile, Merkmale und Einzelheiten der Erfindung ergeben sich aus der nachfolgenden Beschreibung eines Ausführungsbeispiels. Es zeigen:

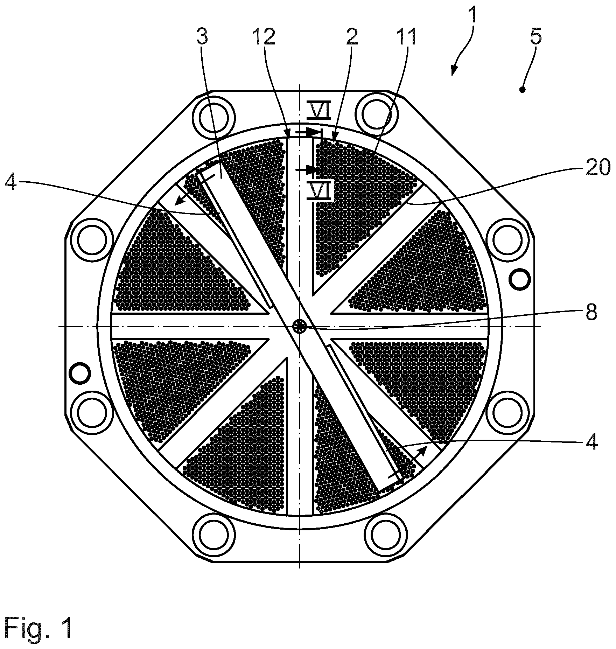

- Fig. 1: eine Ansicht einer Granuliervorrichtung mit einer Strangerzeugungsvorrichtung und mehreren Schneidmessern an einer stromabwärtigen Seite,

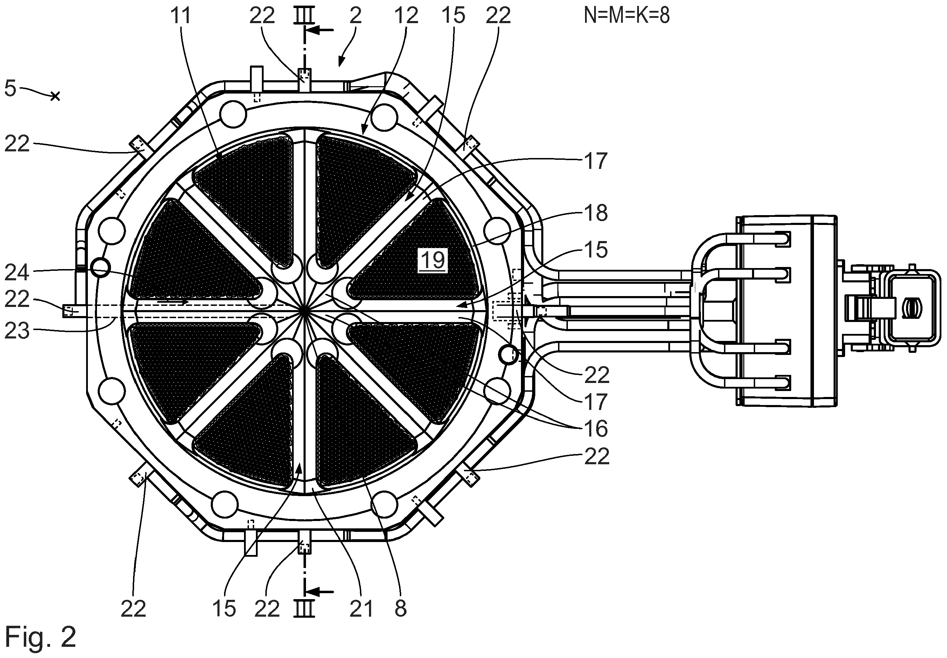

- Fig. 2: eine Ansicht der Strangerzeugungsvorrichtung in Fig. 1 an einer stromaufwärtigen Seite,
- Fig. 3: einen Schnitt durch die Strangerzeugungsvorrichtung entlang der Schnittlinie III-III in Fig. 2,

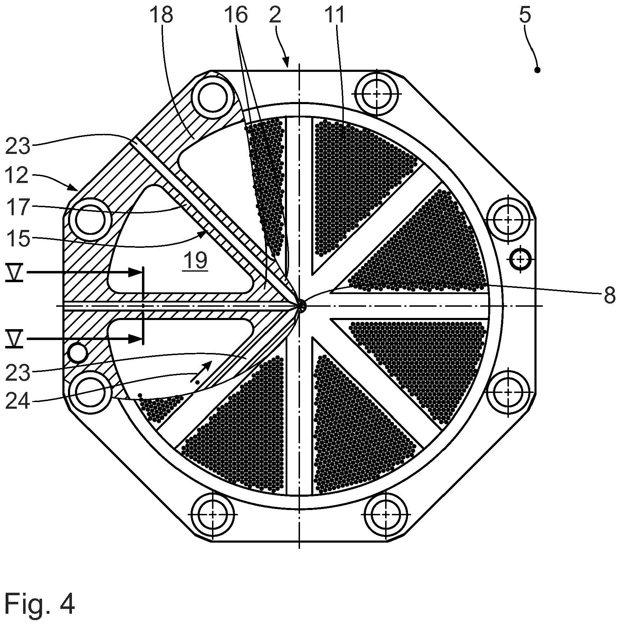

- Fig. 4: einen Schnitt durch die Strangerzeugungsvorrichtung entlang der Schnittlinie IV-IV in Fig. 3,

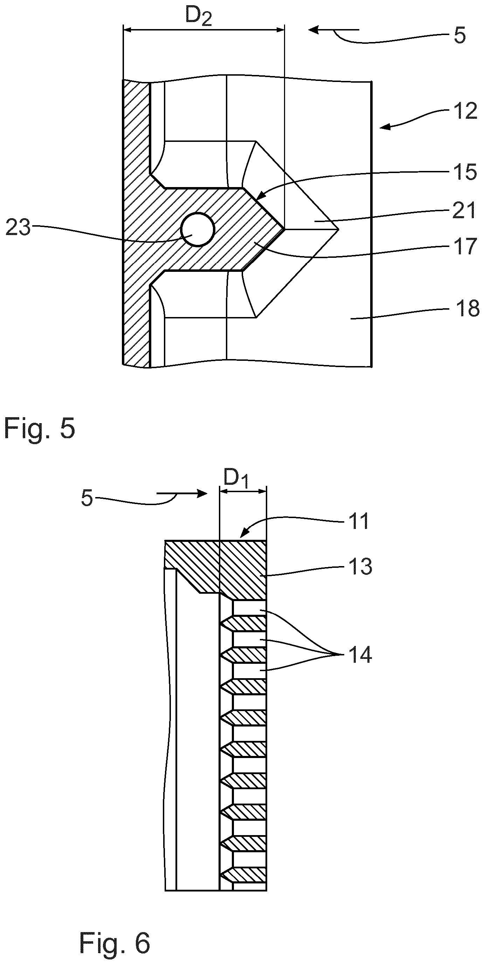

- Fig. 5: einen Schnitt durch die Strangerzeugungsvorrichtung entlang der Schnittlinie V-V in Fig. 4, und
- Fig. 6: einen Teilschnitt durch eine Lochplatte der Strangerzeugungsvorrichtung entlang der Schnittlinie VI-VI in Fig. 1.

Eine Granuliervorrichtung 1 für eine Schneckenmaschine umfasst eine Strangerzeugungsvorrichtung 2 und einen Messerträger 3 mit mehreren daran angeordneten Schneidmessern 4. Der Messerträger 3 mit den Schneidmessern 4 ist in einer Strömungsrichtung 5 eines zu granulierenden Materials 6 an einer stromabwärtigen Seite 7 der Strangerzeugungsvorrichtung 2 angeordnet. Der Messerträger 3 mit den Schneidmessern 4 ist in üblicher Weise um eine Mittellängsachse 8 mittels eines nicht näher dargestellten elektrischen Antriebsmotors drehantreibbar. Der Messerträger 3 mit den Schneidmessern 4 ist in Richtung der Mittellängsachse 8 in üblicher Weise verlagerbar, sodass die Schneidmesser 4 zum Betrieb der Granuliervorrichtung 1 gegen die Strangerzeugungsvorrichtung 2 anliegend angeordnet werden können.

Die Strangerzeugungsvorrichtung 2 dient zum Erzeugen granulierbarer Materialstränge 9 aus dem Material 6, indem dieses von einer stromaufwärtigen Seite 10 durch die Strangerzeugungsvorrichtung 2 zu der stromabwärtigen Seite 7 strömt. Hierzu weist die Strangerzeugungsvorrichtung 2 mehrere Lochplatten 11 auf, die an einem Verstärkungsträger 12 angeordnet sind. Die Lochplatten 11 weisen eine jeweilige Grundplatte 13 auf, in der eine Vielzahl von Durchtrittslöchern 14 ausgebildet sind, die sich von der stromaufwärtigen Seite 10 zu der stromabwärtigen Seite 7 erstrecken. Die Durchtrittslöcher 14 bilden einen jeweiligen Strömungskanal für das Material 6 aus, der einen kegelförmigen Eintrittsabschnitt und einen nachfolgenden zylinderförmigen Strömungsabschnitt aufweist.

Der Verstärkungsträger 12 umfasst mehrere Verstärkungsstreben 15, die radial zu der Mittellängsachse 8 verlaufen. Die Verstärkungsstreben 15 sind sternförmig angeordnet und weisen gleiche Winkelabstände voneinander auf. Die Verstärkungsstreben 15 sind an einem jeweiligen der Mittellängsachse 8 zugewandten inneren Ende 16 einteilig miteinander verbunden. An einem jeweiligen der Mittellängsachse 8 abgewandten äußeren Ende 17 sind die Verstärkungsstreben 15 über Verbindungsstreben 18 einteilig miteinander verbunden. Die Verbindungsstreben 18 sind an einer der Mittellängsachse 8 zugewandten Seite als Kreisbogen geformt.

Benachbarte Verstärkungsstreben 15 begrenzen paarweise einen jeweils zugehörigen freien Durchtrittsbereich 19. Die freien Durchtrittsbereiche 19 sind in Richtung der Mittellängsachse 8 spitz zulaufend ausgebildet. Durch die kreisbogenförmige Ausbildung der Verbindungsstreben 18 weisen die Durchtrittsbereiche 19 die Form eines Kreissektors auf.

Die Lochplatten 11 sind entsprechend den freien Durchtrittsbereichen 19 geformt. Die Lochplatten 11 sind von der stromabwärtigen Seite 7 in Ausnehmungen 20 des Verstärkungsträgers 12 eingesetzt, sodass die Lochplatten 11 mit dem Verstärkungsträger 12 bzw. den Verstärkungsstreben 15 eine ebene Fläche ausbilden. Im Bereich der Ausnehmungen 20 liegen die Lochplatten 11 in einem Randbereich gegen einen Verstärkungsträgeranschlag des Verstärkungsträgers 12 an und sind an dem Verstärkungsträger 12 auswechselbar befestigt. Zur Erzielung eines geringen Strömungswiderstands weisen die Verstärkungsstreben 15 einen sich in Richtung der stromaufwärtigen Seite 10 verjüngenden Querschnitt auf. Die Verstärkungsstreben 15 sind vorzugsweise keilförmig ausgebildet.

Eine Anzahl N der Verstärkungsstreben 15 ist gleich einer Anzahl M der Lochplatten 11. Somit ist zwischen jeweils zwei benachbarten Verstärkungsstreben 15 eine einteilig ausgebildete Lochplatte 11 angeordnet. Die Durchtrittslöcher 14 der jeweiligen Lochplatte 11 sind im Wesentlichen im gesamten zugehörigen Durchtrittsbereich 19 ausgebildet. Für die Anzahl N der Verstärkungsstreben 15 gilt allgemein: 2 ≤ N ≤ 16, insbesondere 3 ≤ N ≤ 12, und insbesondere 4 ≤ N ≤ 8. Für das in den Figuren dargestellte Ausführungsbeispiel gilt: N = 8.

Die Lochplatten 11 weisen im Bereich der Durchtrittslöcher 14 in der Strömungsrichtung 5 eine Dicke D₁ auf. Weiterhin weisen die Verstärkungsstreben 15 außerhalb eines Verbindungsbereichs 21 zu den Verbindungsstreben 18 in der Strömungsrichtung 5 eine Dicke D₂ auf. Für das Verhältnis D₁/D₂ gilt allgemein: 0,05 ≤ D₁/D₂ ≤ 0,5, insbesondere 0,1 ≤ D₁/D₂ ≤ 0,4, und insbesondere 0,15 ≤ D₁/D₂ ≤ 0,3.

Zum Beheizen der Lochplatten 11 weist die Strangerzeugungsvorrichtung 2 elektrische Heizpatronen 22 auf. Die Heizpatronen 22 sind in einem jeweils zugehörigen Aufnahmeraum 23 angeordnet. Die Aufnahmeräume 23 sind in dem Verstärkungsträger 12 ausgebildet.

Eine Anzahl K der Heizpatronen 22 entspricht der Anzahl N der Verstärkungsstreben 15. In jeder Verstärkungsstrebe 15 ist somit ein Aufnahmeraum 23 ausgebildet, der sich in einer jeweiligen Längserstreckungsrichtung 24 der zugehörigen Verstärkungsstrebe 15 erstreckt, also radial erstreckt. In dem jeweiligen Aufnahmeraum 23 ist die zugehörige Heizpatrone 22 angeordnet, die sich ebenfalls in der Längserstreckungsrichtung 24, also radial erstreckt.

Die Heizpatronen 22 haben jeweils eine Heizleistung, die in der Längserstreckungsrichtung 24, also in Richtung der Mittellängsachse 8 variiert, insbesondere abnimmt. Hierzu weist die jeweilige Heizpatrone 22 beispielsweise einen Heizkreis oder mehrere Heizkreise mit einer variablen und insbesondere einstellbaren Heizleistung auf. Beispielsweise bilden die Heizpatronen 22 zwei Heizbereiche H₁ und H₂ mit unterschiedlichen Heizleistungen aus. Die Heizleistung im Heizbereich H₂ ist im vorliegenden Ausführungsbeispiel kleiner als die Heizleistung im Heizbereich H₁. Der Heizbereich H₁ weist beispielsweise eine Heizleistung von 260 W auf, wohingegen der Heizbereich H₂ eine Heizleistung von 130 W aufweist. Insgesamt weist jede Heizpatrone 22 somit beispielsweise eine Heizleistung von 390 W auf, so dass die Lochplatten 11 mit einer Heizleistung von insgesamt 3.120 W beheizbar sind. Die Heizbereich H₁ und H₂ haben insgesamt eine Länge von beispielsweise 180 mm.

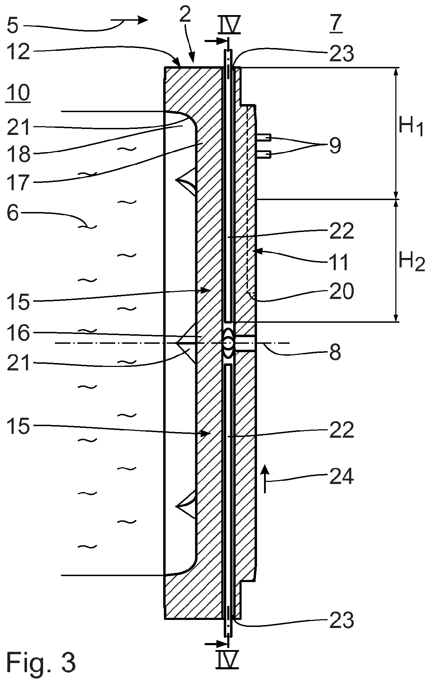

Nachfolgend ist die Funktionsweise der Granuliervorrichtung 1 beschrieben:
Das strömende Material 6 wird von einer Schneckenmaschine bereitgestellt, die stromaufwärts der Granuliervorrichtung 1 angeordnet ist. Das Material 6 strömt von der stromaufwärtigen Seite 10 durch die Durchtrittslöcher 14 der Lochplatten 11, sodass an der stromabwärtigen Seite 7 der Lochplatten 11 die Materialstränge 9 ausgebildet werden. Dies ist in Fig. 3 angedeutet. Um ein sogenanntes Einfrieren, also ein Verfestigen des Materials 6 in den Durchtrittslöchern 14 zu vermeiden, werden die Lochplatten 11 mittels der Heizpatronen 22 beheizt. Die von den Heizpatronen 22 erzeugte Wärme wird über die Verstärkungsstreben 15 auf die Lochplatten 11 verteilt und übertragen. Dadurch, dass die Heizleistung der Heizpatronen 22 in Richtung der Mittellängsachse 8 abnimmt, werden die Lochplatten 11 vergleichsweise gleichmäßig beheizt, da die zu beheizende Masse der Lochplatten 11 aufgrund ihrer Form in Richtung der Mittellängsachse 8 abnimmt. Weiterhin wird das Material 6 an der stromaufwärtigen Seite 10 durch den Verstärkungsträger 12 zusätzlich erwärmt.

Durch die Anordnung der Lochplatten 11 an dem Verstärkungsträger 12 sind die Lochplatten 11 mit einer geringen Dicke D₁ ausgebildet, ohne dass deren mechanische Festigkeit bzw. Steifigkeit beeinträchtigt wird. Hierdurch weisen die Lochplatten 11 einen geringen Strömungswiderstand für das Material 6 auf, sodass der Druckverlust des Materials 6 beim Durchströmen der Strangerzeugungsvorrichtung 2 gering ist. Durch den keilförmigen Querschnitt wird zudem der Strömungswiderstand der Verstärkungsstreben 15 reduziert, sodass auch der Verstärkungsträger 12 einen vergleichsweise geringen Druckverlust des Materials 6 verursacht.

Die erzeugten Materialstränge 9 werden mittels der rotierenden Schneidmesser 4 in üblicher Weise geschnitten, sodass an der stromabwärtigen Seite 7 aus den Materialsträngen 9 Granulat erzeugt wird.

Die Granuliervorrichtung 1 bzw. die Strangerzeugungsvorrichtung 2 ermöglichen somit in einfacher Weise eine gleichmäßige Beheizung der Lochplatten 11 in Verbindung mit einem geringen Druckverlust des durch die Lochplatten 11 strömenden Materials 6.

Bei einem alternativen Ausführungsbeispiel kann eine einzige Lochplatte 11 an dem Verstärkungsträger 12 angeordnet sein und eine ebene Fläche für das mindestens eine Schneidmesser 4 ausbilden. Bei einem weiteren alternativen Ausführungsbeispiel können die Lochplatte 11 bzw. die Lochplatten 11 und der Verstärkungsträger 12 einteilig ausgebildet sein.

## Patentansprüche

1. Strangerzeugungsvorrichtung zum Erzeugen granulierbarer Materialstränge mit
- mindestens einer Lochplatte (11), die eine Grundplatte (13) und sich in der Grundplatte (13) von einer stromaufwärtigen Seite (10) bis zu einer stromabwärtigen Seite (7) erstreckende Durchtrittslöcher (14) aufweist,
- mindestens einer elektrischen Heizpatrone (22) zum Beheizen der mindestens einen Lochplatte (11),
wobei die mindestens eine Lochplatte (11) an einem Verstärkungsträger (12) angeordnet ist,
wobei der Verstärkungsträger (12) mehrere Verstärkungsstreben (15) zur Abstützung der mindestens einen Lochplatte (11) in Verbindung mit einer großflächigen Verteilung und Übertragung der von der mindestens einen elektrischen Heizpatrone (22) erzeugten Wärme auf die mindestens eine Lochplatte (11) umfasst, und wobei in dem Verstärkungsträger (12) mindestens ein Aufnahmeraum (23) ausgebildet ist,
**dadurch gekennzeichnet,**
**dass** der mindestens eine Aufnahmeraum (23) in einer zugehörigen Verstärkungsstrebe (15) ausgebildet ist und sich in einer Längserstreckungsrichtung (24) der Verstärkungsstrebe (15) erstreckt,
**dass** in dem mindestens einen Aufnahmeraum (23) die mindestens eine elektrische Heizpatrone (22) angeordnet ist.

2. Strangerzeugungsvorrichtung nach Anspruch 1, **dadurch gekennzeichnet,**
**dass** die Verstärkungsstreben (15) radial zur Mittellängsachse (8) verlaufen.

3. Strangerzeugungsvorrichtung nach Anspruch 1 oder 2, **dadurch gekennzeichnet,**
**dass** die Verstärkungsstreben (15) an einem jeweiligen inneren Ende (16) und/oder an einem jeweiligen äußeren Ende (17) miteinander verbunden sind.

4. Strangerzeugungsvorrichtung nach einem der Ansprüche 1 bis 3,
**dadurch gekennzeichnet,**
**dass** für eine Anzahl N der Verstärkungsstreben (15) gilt: 2 ≤ N ≤ 16, insbesondere 3 ≤ N ≤ 12, und insbesondere 4 ≤ N ≤ 8.

5. Strangerzeugungsvorrichtung nach einem der Ansprüche 1 bis 4,
**dadurch gekennzeichnet,**
**dass** die mindestens eine Lochplatte (11) in den Verstärkungsträger (12) eingesetzt ist.

6. Strangerzeugungsvorrichtung nach einem der Ansprüche 1 bis 5,
**dadurch gekennzeichnet,**
**dass** der Verstärkungsträger (12), insbesondere die Verstärkungsstreben (15), zumindest abschnittsweise einen sich in Richtung der stromaufwärtigen Seite (10) verjüngen Querschnitt aufweist, der insbesondere keilförmig ist.

7. Strangerzeugungsvorrichtung nach einem der Ansprüche 1 bis 6,
**dadurch gekennzeichnet,**
**dass** die mindestens eine Lochplatte (11) eine Dicke D₁ und die Verstärkungsstreben (15) eine Dicke D₂, wobei gilt: 0,05 ≤ D₁/D₂ ≤ 0,5, insbesondere 0,1 ≤ D₁/D₂ ≤ 0,4, und insbesondere 0,15 ≤ D₁/D₂ ≤ 0,3.

8. Strangerzeugungsvorrichtung nach einem der Ansprüche 1 bis 7,
**dadurch gekennzeichnet,**
**dass** sich die mindestens eine elektrische Heizpatrone (22) radial zu einer Mittellängsachse (8) des Verstärkungsträgers (12) erstreckt.

9. Strangerzeugungsvorrichtung nach Anspruch 8, **dadurch gekennzeichnet,**
**dass** die mindestens eine elektrische Heizpatrone (22) eine Heizleistung hat, die in Richtung der Mittellängsachse (8) variiert, insbesondere abnimmt.

10. Strangerzeugungsvorrichtung nach einem der Ansprüche 1 bis 9,
**dadurch gekennzeichnet,**
**dass** mehrere Lochplatten (11) an dem Verstärkungsträger (12) angeordnet sind, wobei insbesondere eine Anzahl M der Lochplatten (11) gleich einer Anzahl N der Verstärkungsstreben (15) ist.

11. Strangerzeugungsvorrichtung nach einem der Ansprüche 1 bis 10,
**dadurch gekennzeichnet,**
**dass** in jeder Verstärkungsstrebe (15) ein Aufnahmeraum (23) ausgebildet und eine zugehörige elektrische Heizpatrone (22) darin angeordnet ist.

12. Granuliervorrichtung für eine Schneckenmaschine mit
- einer Strangerzeugungsvorrichtung (2) nach einem der Ansprüche 1 bis 11, und
- mindestens einem drehantreibbaren Schneidmesser (4), das an der stromabwärtigen Seite (7) der Strangerzeugungsvorrichtung (2) angeordnet ist.

## Claims

1. Strand production device for producing pelletizable material strands with
- at least one perforated plate (11), which has a base plate (13) and through-holes (14) extending in the base plate (13) from an upstream side (10) to a downstream side (7),
- at least one electrical heating cartridge (22) to heat the at least one perforated plate (11),
wherein the at least one perforated plate (11) is arranged on a reinforcing carrier (12),
wherein the reinforcing carrier (12) comprises a plurality of reinforcing struts (15) to support the at least one perforated plate (11) while ensuring a large-surface distribution and transfer of the heat generated by the at least one electrical heating cartridge (22) to the at least one perforated plate (11), and
wherein at least one receiving space (23) is formed in the reinforcing carrier (12),
**characterized in**
**that** the at least one receiving space (23) is formed in an associated reinforcing strut (15) and extends in a longitudinal extension direction (24) of the reinforcing strut (15),
**that** the at least one electrical heating cartridge (22) is arranged in the at least one receiving space (23).

2. Strand production device as claimed in claim 1, **characterized in**
**that** the reinforcing struts (15) run radially to the longitudinal centre axis (8).

3. Strand production device as claimed in claim 1 or 2, **characterized in that** the reinforcing struts (15) are connected to each other at a respective inner end (16) and/or at a respective outer end (17).

4. Strand production device as claimed in any one of claims 1 to 3, **characterized in**
**that** a number N of the reinforcing struts (15) is such that 2 ≤ N ≤ 16, in particular 3 ≤ N ≤ 12, and in particular 4 ≤ N ≤ 8.

5. Strand production device as claimed in any one of claims 1 to 4, **characterized in**
**that** the at least one perforated plate (11) is inserted in the reinforcing carrier (12).

6. Strand production device as claimed in any one of claims 1 to 5, **characterized in**
**that** the reinforcing carrier (12), in particular the reinforcing struts (15), has a cross-section, which tapers in the direction of the upstream side (10) at least partly, the cross-section in particular being wedge-shaped.

7. Strand production device as claimed in any one of claims 1 to 6, **characterized in**
**that** the at least one perforated plate (11) has a thickness D₁, and the reinforcing struts (15) have a thickness D₂, wherein 0.05 ≤ D₁/D₂ ≤ 0.5, in particular 0.1 ≤ D₁/D₂ ≤ 0.4, and in particular 0.15 ≤ D₁/D₂ ≤ 0.3.

8. Strand production device as claimed in any one of claims 1 to 7, **characterized in**
**that** the at least one electrical heating cartridge (22) extends radially to a longitudinal centre axis (8) of the reinforcing carrier (12).

9. Strand production device as claimed in claim 8, **characterized in**
**that** the at least one electrical heating cartridge (22) has a thermal output, which varies, in particular decreases, in the direction of the longitudinal centre axis (8).

10. Strand production device as claimed in any one of claims 1 to 9, **characterized in**
**that** a plurality of perforated plates (11) are arranged on the reinforcing carrier (12), wherein in particular a number M of the perforated plates (11) is equal to a number N of the reinforcing struts (15).

11. Strand production device as claimed in any one of claims 1 to 10, **characterized in**
**that** a receiving space (23) is formed in each reinforcing strut (15), and an associated electrical heating cartridge (22) is arranged therein.

12. Pelletizer for a screw extruder with
- a strand production device (2) as claimed in any one of claims 1 to 11, and
- at least one rotatably drivable cutting knife (4) arranged on the downstream side (7) of the strand production device (2).

## Revendications

1. Dispositif de production de tiges pour produire des tiges de matériaux granulables, comprenant
- au moins une platine perforée (11), présentant une plaque de base (13) et des trous de passage (14) s'étendant dans la plaque de base (13) d'un côté en amont (10) à un côté en aval (7),
- au moins une cartouche chauffante électrique (22) pour chauffer l'au moins une plaque perforée (11),
l'au moins une plaque perforée (11) étant disposée sur un support de renfort (12),
le support de renfort (12) comprenant une pluralité d'entretoises de renfort (15) pour supporter l'au moins une plaque perforée (11) en connexion avec une vaste répartition et transmission de la chaleur produite par l'au moins une cartouche chauffante électrique (22) sur l'au moins une plaque perforée (11), et
au moins un espace de logement (23) étant configuré dans l'au moins un support de renfort (12),
**caractérisé en ce**
**que** l'au moins un espace de logement (23) est configuré dans une entretoise de renfort (15) associée et s'étend dans une direction longitudinale d'extension (24) de l'entretoise de renfort (15),
**que** dans l'au moins un espace de logement (23), l'au moins une cartouche chauffante électrique (22) est disposée.

2. Dispositif de production de tiges selon la revendication 1, **caractérisé en ce**
**que** les entretoises de renfort (15) s'étendent radialement à l'axe central longitudinal (8).

3. Dispositif de production de tiges selon la revendication 1 ou 2, **caractérisé en ce**
**que** les entretoises de renfort (15) sont liées l'une à l'autre sur une extrémité intérieure respective (16) et/ou sur une extrémité extérieure respective (17).

4. Dispositif de production de tiges selon l'une quelconque des revendications 1 à 3, **caractérisé en ce**
**qu**'un nombre N des entretoises de renfort (15) est tel que: 2 ≤ N ≤ 16, en particulier 3 ≤ N ≤ 12, et en particulier 4 ≤ N ≤ 8.

5. Dispositif de production de tiges selon l'une quelconque des revendications 1 à 4, **caractérisé en ce**
**que** l'au moins une plaque perforée (11) est intégrée dans le support de renfort (12).

6. Dispositif de production de tiges selon l'une quelconque des revendications 1 à 5, **caractérisé en ce**
**que** le support de renfort (12), en particulier les entretoises de renfort (15), présentent au moins par passages une section transversale s'effilant en direction du côté en amont (10), celle-ci étant en particulier cunéiforme.

7. Dispositif de production de tiges selon l'une quelconque des revendications 1 à 6, **caractérisé en ce**
**que** l'au moins plaque perforée (11) présente une épaisseur D₁ et les entretoises de renfort (15) présentent une épaisseur D₂, telles que: 0,05 ≤ D₁/D₂ ≤ 0,5, en particulier 0,1 ≤ D₁/D₂ ≤ 0,4, et en particulier 0,15 ≤ D₁/D₂ ≤ 0,3.

8. Dispositif de production de tiges selon l'une quelconque des revendications 1 à 7, **caractérisé en ce**
**que** l'au moins une cartouche chauffante électrique (22) s'étend radialement à un axe central longitudinal (8) du support de renfort (12).

9. Dispositif de production de tiges selon la revendication 8, **caractérisé en ce**
**que** l'au moins une cartouche chauffante électrique (22) a une puissance de chauffage variant, en particulier diminuant, en direction the l'axe central longitudinal (8).

10. Dispositif de production de tiges selon l'une quelconque des revendications 1 à 9, **caractérisé en ce**
**qu**'une pluralité de plaques perforées (11) est disposée sur le support de renfort (12), en particulier un nombre M des plaques perforées (11) étant égal à un nombre N des entretoises de renfort (15).

11. Dispositif de production de tiges selon l'une quelconque des revendications 1 à 10, **caractérisé en ce**
**que** dans chaque entretoise de renfort (15), un espace de logement (23) est configuré et une cartouche chauffante électrique (22) associée est disposée dedans.

12. Dispositif de granulation pour une machine à vis, comprenant
- un dispositif de production de tiges (2) selon l'une quelconque des revendications 1 à 11, et
- au moins une lame (4) entraînable en rotation, disposée sur le côté en aval (7) du dispositif de production de tiges (2).
